# EUROPEAN PATENT APPLICATION

(11) **EP 1 657 842 A2**
(43) Date of publication of application: **17.05.2006**
(21) Application number: 05256562.9
(22) Date of filing: 22.10.2005
(51) Int. Cl.: H04L 1/00

(54) **Method and apparatus for detecting reception error in data service of digital audio broadcast**

(30) Priority: 11.11.2004 KR 2004091916
(71) Applicant: Samsung Electronics Co., Ltd., Suwon-si, Gyeonggi-Do (KR)
(72) Inventor: Youm, Sun-hee, Suwon-si, Gyeonggi-do (KR)
(74) Representative: Waddington, Richard

(57) **Abstract**

A method and apparatus are provided for detecting a reception error in a data service by inserting an error detection packet between data service data packets. A data storage medium on which an error detection packet structure is recorded for a data service of digital audio broadcast (DAB) includes at least one address information about a channel through which the data service is provided and error detection data corresponding to the address information. The address information and the error detection data are recorded in a packet data field in packet-mode data for the data service.

## Description

Apparatuses and methods consistent with the present invention relate to error detection with respect to received data in a data service of a digital audio broadcast (DAB), and more particularly, to detecting a reception error in a data service by inserting an error detection packet into data for the data service.

A digital audio broadcast (DAB) provides not only an audio service but also a data service. Examples of additional data provided through the data service include still images, moving images, and graphics. Examples of a multimedia service provided through transmission of the additional data may include travel and traffic information services, a program associated data (PAD) service that shows a combination of headline characters and videos of news, or a combination of a weather forecast, traffic information, and an electric map, an independent information service that is not related to broadcasting through a website or a program such as a global positioning system (GPS) for DAB, and a moving image transmission service.

The present invention provides a method and apparatus for detecting a reception error in a data service by inserting an error detection packet between data service data packets or recording error detection data in a PAD field of audio service data.

According to the present invention there is provided an apparatus and method as set forth in the appended claims.

Preferred features of the invention will be apparent from the dependent claims, and the description which follows.

According to an aspect of the present invention, there is provided a data storage medium on which an error detection packet structure is recorded for a data service of a DAB. The data storage medium comprises at least one address information about a channel through which the data service is provided and error detection data corresponding to the address information. The address information and the error detection data are recorded in a packet data field in packet-mode data for the data service.

The error detection data may be cyclic redundancy check (CRC) or forward error correction (FEC) data and is created by accumulating packets having corresponding addresses according to a predetermined CRC or FEC creation method.

According to another aspect of the present invention, there is provided a data storage medium on which a PAD structure, included in audio service data, is recorded. The data storage medium comprises a content indicator indicating information about a channel into which error detection data is loaded, and an extended program associated data (X-PAD) subfield in which error detection data corresponding to the content indicator is recorded. The content indicator and the X-PAD subfield are recorded in an X-PAD field that is used to provide a data service in the form of additional data of an audio service, of a DAB.

According to still another aspect of the present invention, there is provided a method of transmitting data service data packets in DAB. The method comprises (a) dividing data service data into packets of a predetermined size and transmitting the packets and (b) transmitting the packets at a bit rate of a data service and creating and transmitting error detection data packets for the transmitted packets at predetermined time intervals.

According to yet another aspect of the present invention, there is provided a method of providing a data service of DAB. The method comprises (a) recording a content indicator indicating information about a channel through which error detection data is transmitted in an X-PAD field included in audio service data to transmit data service data after loading the data service data into audio service data and (b) creating the audio service data by recording the error detection data in an X-PAD subfield corresponding to the content indicator to form the X-PAD field and transmitting the audio service data.

According to yet another aspect of the present invention, there is provided a method for detecting a reception error in a data service of DAB. The method comprises (a) receiving a data service data packet and (b) determining whether the received packet is an error detection packet, and if the received packet is the error detection packet, analyzing the received packet to determine whether there is an error in receiving the data service data packet, and if there is an error in receiving the data service data packet, discarding the received packet and waiting for reception of another data service data packet.

According to yet another aspect of the present invention, there is provided a method for detecting a reception error in a data service of DAB. The method comprises (a) determining whether there are an X-PAD field and an error detection channel by analyzing a fixed program associated data (F-PAD) field of audio service data, (b) if there exists an X-PAD field, analyzing a channel indicator included in the X-PAD field to search for a channel into which error detection data is loaded, and obtaining an error detection packet by analyzing an X-PAD subfield corresponding to the found channel; and (c) determining whether there is an error in received data service data by analyzing the obtained error detection packet.

According to yet another aspect of the present invention, there is provided an apparatus for detecting a reception error in a data service of a DAB. The apparatus comprises a receiving unit, a determining unit, and an error detection data analyzing unit. The receiving unit is operable to receive data service data. The determining unit is operable to determine whether the received data is error detection data and to transmit the received data to an analyzing unit if the received data is the error detection data, or to determine whether there is an error in the received data if the received data is not error detection data, and to transmit the received data to a storing unit if there is no error in the received data. The error detection data analyzing unit is operable to determine whether there is an error in the received error detection data by analyzing the received error detection data and to discard the received data service data stored in a storing unit and to wait for reception of another data service data according to a result of the analysis.

The storing unit is operable to store the data service data.

The error detection data may comprise at least one address information about a channel through which the data service is provided and error detection data corresponding to the address information. The address information and the error detection data are recorded in a packet data field, in packet-mode data, for the data service.

The error detection data may comprise at least one address information about a channel through which the data service is provided and error detection data corresponding to the address information. The address information and the error detection data are recorded in an X-PAD field that is used to provide a data service, after being included in an audio service of DAB.

For a better understanding of the invention, and to show how embodiments of the same may be carried into effect, reference will now be made, by way of example, to the accompanying diagrammatic drawings in which:
FIG. 1 illustrates a configuration of a transmission side of a digital audio broadcast (DAB) system that provides a data service;
FIG. 2 illustrates a configuration of a reception side of the DAB system;
FIG. 3 is a view for explaining how audio service data, data service data, and video service data are multiplexed onto a main service channel (MSC);
FIG. 4 is a flowchart illustrating a method for detecting a reception error in a data service;
FIG. 5 is a view for explaining how cyclic redundancy check (CRC) packets, which are used as error detection packets, are inserted between data service data packets;
FIG. 6 is a view for explaining how packet mode data forms an MSC data group;
FIG. 7 illustrates an error detection packet according to an exemplary embodiment of the present invention;
FIG. 8 is a view for explaining how PAD is embedded in audio service data;
FIG. 9 is a view for explaining how error detection data is recorded in an extended program association data (X-PAD) field according to an exemplary embodiment of the present invention; and
FIG. 10 is a block diagram of an apparatus for detecting a reception error in a data service.

Since a field for determining whether data loss occurs during transmission due to a transmission error is not contained in a data structure for a data service, even when a portion of data is lost and is not received, it can be determined whether an error occurs only after all the data forming a meaningful transmission unit of a predetermined size is received and then decoded.

For example, in the data service of DAB, data for the data service is divided into smaller packets and is then transmitted because the data is transmitted using a narrow band. However, since each packet does not contain an index field indicating its transmission order, the occurrence of data loss can be determined only after several reception packets forming a meaningful unit are all received and combined. As a result, even when a reception error occurs, data should be unnecessarily stored until it is determined whether a reception has error occurred.

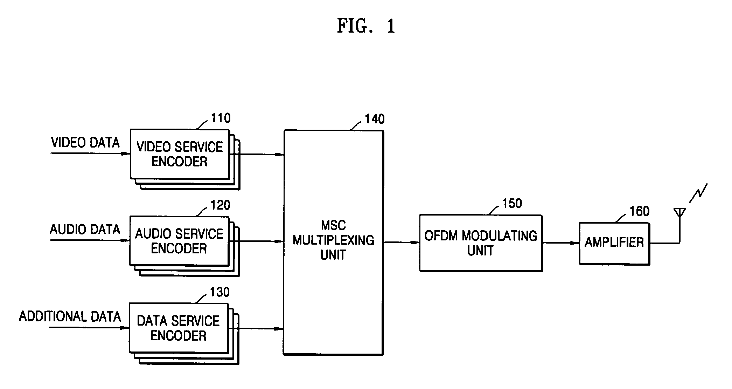

FIG. 1 illustrates a configuration of transmission side of a DAB system that provides a data service.

Services provided by the DAB system include an audio service, a video service, and a data service. Thus, the DAB system includes a video service encoder 110, an audio service encoder 120, and a data service encoder 130 to encode corresponding service data.

After video data such as movies, dramas, and music videos are transmitted to the video service encoder 110 and then encoded into stream mode data, it is subjected to channel coding and then input to a main service channel (MSC) multiplexing unit 140. After audio data such as voices and music is input to the audio service encoder 120 and is subjected to encoding and channel coding, it is input to the MSC multiplexing unit 140. Since a plurality of video services and audio services can be provided for each channel in the DAB system, there can be a plurality of video service encoders 110 and audio service encoders 120 in the DAB system. Character data and web data are classified as packet mode data. After the packet mode data is input to the data service encoder 130 and is subjected to encoding and channel coding, it is input to the MSC multiplexing unit 140. Since a plurality of packet mode data services can be provided in the DAB system, there can be a plurality of data service encoders in the DAB system. Such data service data can also be provided by loading it into a PAD field of audio service data.

The MSC multiplexing unit 140 multiplexes encoded video service data, encoded audio service data, and encoded data service data, adds additional information and multiplexing information for respective services, and adds synchronization information to create and output a DAB transmission frame. The created DAB transmission frame is processed by an orthogonal frequency division multiplexing (OFDM) modulating unit 150 and an amplifier 160 and is transmitted after being loaded onto a VHF band wave.

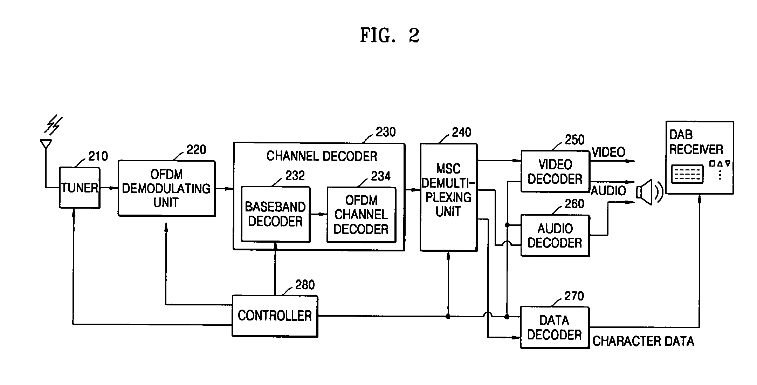

FIG. 2 illustrates a configuration of a reception side of the DAB system that receives a data service. A DAB receiver may be of a fixed, portable, or mobile type.

In a DAB receiver, an OFDM modulated signal is received through a tuner 210 and demodulated by a demodulator 220 to create a DAB transmission frame. A channel decoder 230 includes a base-band decoder 232 and an OFDM channel decoder 234. The channel decoder 230 parses fast information channel (FIC) data included in the DAB transmission frame to create a service list and provides the created service list to a user. Service encoding parameters and packetization information are included in the FIC data. Thus, by analyzing the service encoding parameters and packetization information, it is possible to identify provided services and methods by which data forming the provided services is encoded and packetized.

According to control information by a controller 280, an MSC demultiplexing unit 240 extracts and outputs corresponding service data. If the user selects a video service, encoded video streams, encoded audio streams, and encoded additional data streams that form the video service are transmitted to a video decoder 250, an audio decoder 260, and a data decoder 270 and then decoded by the same, respectively. A controller 280 controls component units according to video service encoding parameter information and packetization information.

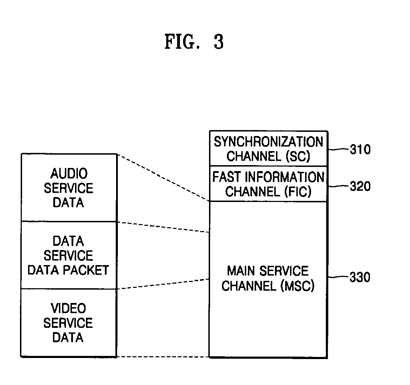

FIG. 3 is a view for explaining that audio service data, data service data, and video service data are multiplexed onto the MSC.

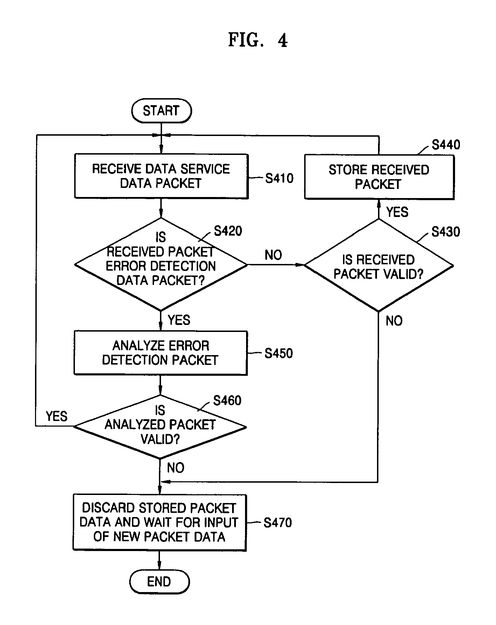

The DAB transmission frame includes data to be transmitted through a synchronization channel (SC) 310, an FIC 320, and an MSC 330. The audio service data, the data service data, and the video service data are loaded into the MSC 330. As can be seen from FIG. 3, the data service data may be loaded into the MSC 330 using a packet mode or loaded as a portion of the audio service data. The data service data that is loaded as a portion of the audio service data is called program associated data (PAD). For example, when pictures or profile data of a singer are transmitted after being included in audio data during music broadcasting, they are transmitted after being loaded into a PAD field. Hereinafter, a method for detecting a reception error in a data service using packets will be described in detail with reference to FIGS. 4 through 7.

FIG. 4 is a flowchart illustrating a method for detecting an error in receiving a data service data packet according to an exemplary, embodiment of the present invention.

A data service data packet is received in operation S410, and it is determined whether the received packet is an actual data service data packet or an error detection packet inserted for error detection in operation S420. Examples of data inserted for error detection include a cyclic redundancy check (CRC) packet or a forward error correction (FEC) packet. The structure of the CRC or FEC packet will be described later. If the received packet is an actual data service data packet, it is determined whether the received packet is valid in operation S430. If the received packet is valid, it is stored and reception of the next packet is awaited in operation S440. If the received packet is not valid, it is discarded and input of a new packet is awaited in operation S470. The validity of the received packet can be determined by checking the CRC packet attached to the end of the received packet.

If the received packet is determined to be an error detection packet in operation S420, the error detection packet is analyzed in operation S450 to determine whether the error detection packet is valid in operation S460. If the error detection packet is a CRC packet, the validity of the CRC packet is determined using a well-known CRC calculation method. If the error detection packet is a FEC packet, the validity of the FEC packet is also determined using a well-known FEC calculation method. When the error detection packet is determined to be valid using CRC or FEC calculation, there has been no error in receiving packets so far. Thus, input of another packet is awaited, an error detection packet is analyzed, and if the error detection packet is determined not to be valid, packets that have been stored so far are discarded and input of another packet is awaited in operation S470.

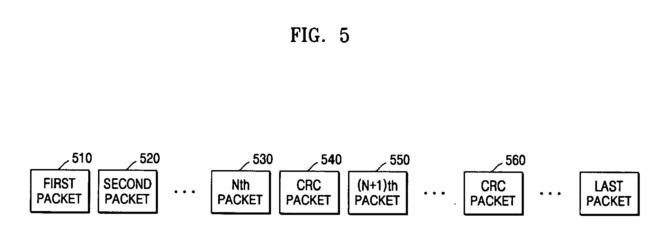

FIG. 5 is a view for explaining how the CRC packets used as the error detection packets are inserted between the data service data packets.

As described above, the data service data packets in a DAB are sequentially input. Since there may be different types of packet data in different channels, each packet data includes an address for identifying its type. Such packets are multiplexed onto the MSC as described above with reference to FIG. 3. In an exemplary embodiment of the present invention, a CRC packet 540 is inserted as the error detection packet for checking if packets from a first packet 510 and a second packet 520 to an nth packet 530 are all received. Several packets including an (n+1)th packet are further contained and are followed by a CRC packet 560. The CRC packet 560 is used to check if the packets 510 through 550 that have been received so far are received without any error. The frequency of insertion of a CRC packet 540, 560 used as the error detection packet is variably determined according to a bit rate of a data service. For example, if a transmission error abruptly increases or a bit rate increases, it is desirable to more frequently perform error detection, and thus, the error detection packet is more frequently inserted. An FEC packet may also be used as the error detection packet instead of a CRC packet.

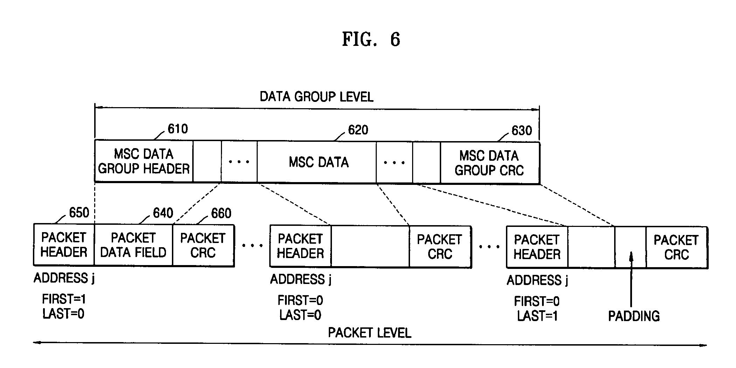

FIG. 6 is a view for explaining how packet mode data forms an MSC data group.

If viewed from a data group level, data service data includes an MSC data group header 610, MSC data 620, and an MSC data group CRC 630. The data service data is divided into packets of a predetermined size and then transmitted, as described above with reference to FIG. 5. To this end, the data service data is recorded in a packet data field 640, and a packet header 650 is attached to the front of the packet data field 640, while a packet CRC 660 is attached to the rear of the packet data field 640. The packet header 650 includes an address field for identifying a service for which the packet data is intended and a field for indicating the start and end of the packet data. The structures of the first packet 510 and the nth packet 530 of FIG. 5 can be seen from FIG. 6.

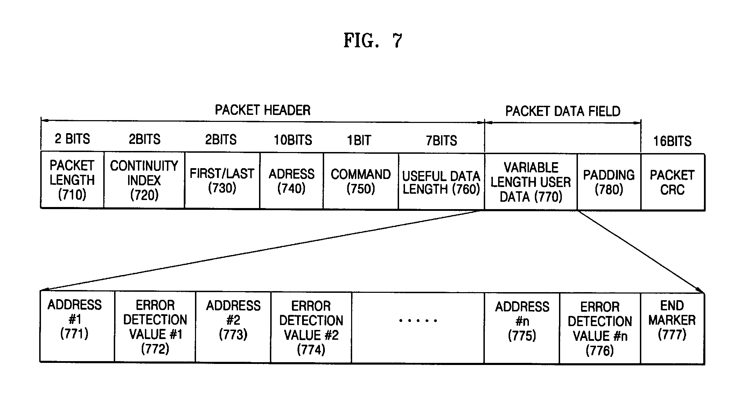

FIG. 7 illustrates the structure of an error detection packet according to an exemplary embodiment of the present invention.

The error detection packet is similar to, but different, from general packet data in that error detection data such as a CRC or FEC packet is recorded in a packet data field. A packet header includes a packet length field 710, a continuity index field 720, a first/last indicating packet field 730, an address field 740, a command field 750, and a useful data length field 760.

The packet length field 710 is composed of two bits, and the total length of packets including a packet header (650 of FIG. 6), a packet data field (640 of FIG. 6), and a CRC packet (660 of FIG. 6) is determined according to the packet length field 710. The continuity index field 720 is composed of two bits and a value of the continuity index 720 is incremented by one whenever one packet is transmitted. Thus, since the value of the continuity index field 720 is two bits value, if four packets are consecutively lost, in spite of the packet losses, it is impossible to recognize the packet losses based on the value stored in the continuity index field 720 because it appears that continuous transmission has occurred. The first/last indicating packet field 730 is a value for determining whether a packet is the first or last packet. The address field 740 is required for identifying a type of a packet because different types of packets may be transmitted through different channels. For example, when profile data and picture data of a singer are transmitted using a data service packet mode, information for distinguishing packets of the profile data from packets of the picture data is recorded in the address field 740. The command field 750 indicates whether a corresponding packet is intended for issuing of a specific-use command. The length of the packet data field is recorded in the useful data length field 760.

Error detection data is recorded in a variable length user data field 770 of the packet data field. Since packets may have different addresses, error detection values for each of the addresses are all recorded in the variable length user data field 770. In other words, an error detection value #1 772 for an address #1 771, an error detection value #2 774 for an address #3 773, and an error detection value #n 776 for an address #n 775 are sequentially recorded in the variable length user data field 770. Address values used in a data service may range from 0 to 1023, and an arbitrary value that has not been used by a user or a DAB system can be used as an address value for error detection data. An end marker 777 indicates that there is no more error detection value. To make the length of the packet data field equal to a value of the packet length field 710, a padding field 780 comprised of 0's or l's is used.

Insertion of the error detection data and a method for detecting an error using the insertion of the error detection data in a data service using a packet mode have been described so far. Hereinafter, insertion of the error detection data using PAD in a data service will be described in detail.

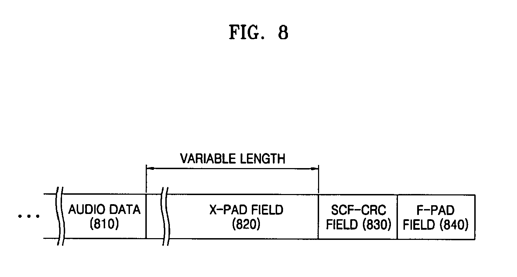

FIG. 8 is a view for explaining how PAD is loaded into audio service data.

If audio data is transmitted in a stream mode, an extended program associated data (X-PAD) field 820 having a variable length, a scale factor error check (SCF-CRC) field 830, and a fixed program associated data (F-PAD) field 840 are added to the end of audio data 810. Additional data, that is associated with an audio service, is loaded into the X-PAD field 820. In an exemplary embodiment of the present invention, the error detection data is inserted into the X-PAD field 820.

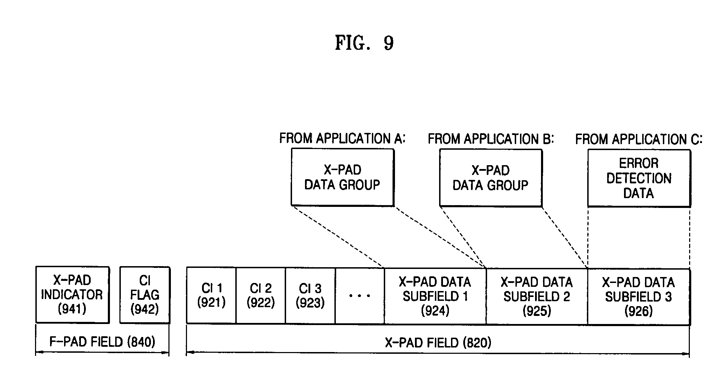

FIG. 9 is a view for explaining that error detection data is recorded in the X-PAD field 820 according to an exemplary embodiment of the present invention.

The F-PAD field 840 includes an X-PAD indicator 941 and a content indicator (CI) flag 942. The X-PAD indicator 941 indicates whether the X-PAD field exists. The CI flag 942 indicates which CI exists in the X-PAD field 820.

The X-PAD field 820 includes a CI 1 921, a CI 2 922, and a CI 3 923 and X-PAD data subfields 924 through 926 corresponding to CI 1 921, CI 2 922, and CI 3 923. However, there is no field indicating whether X-PAD data is continuously received without any error in the X-PAD field 820. In other words, it is impossible to check if any one of the X-PAD data subfields 924 through 926 is lost. Thus, one of CI 1 921, CI 2 922, and CI 3 923 is set to transmit the error detection data and the error detection data is inserted into an X-PAD data subfield corresponding to the set CI. The error detection data may be CRC or FEC data. In FIG. 9, the CI for the error detection data is CI 3 923 and the error detection data is loaded into the X-PAD data subfield 926 corresponding to CI 3 923.

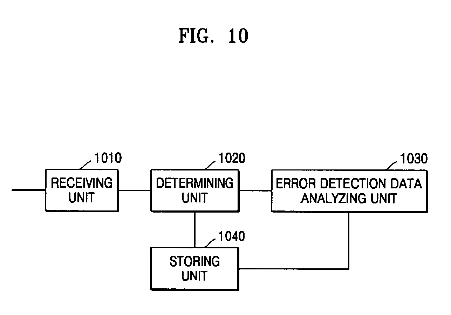

FIG. 10 is a block diagram of an apparatus for detecting a reception error in a data service according to an exemplary embodiment of the present invention.

The apparatus for detecting a reception error in a data service includes a receiving unit 1010, a determining unit 1020, an error detection data analyzing unit 1030, and a storing unit 1040. The receiving unit 1010 receives data service data. The determining unit 1020 determines whether received data is error detection data and, if there is no error in the received data, transmits the received data to the error detection data analyzing unit 1030 if the received data is error detection data. If the received data is not error detection data, the determining unit 1020 determines whether there is any error in the received data and transmits the received data to the storing unit 1040. The error detection data analyzing unit 1030 analyzes the transmitted error detection data to determine whether there is any error in the transmitted error detection data and causes the storing unit 1040 to delete the data service data which has been stored, according to a result of the analysis. The storing unit 1040 stores data service data.

The data service may be provided using a packet mode or in the form of additional data of an audio service. Thus, the error detection data may be transmitted using a packet mode as described with reference to FIGS. 5 through 7 or transmitted after being loaded into a PAD field in which additional data of an audio service is loaded, as described with reference to FIGS. 8 and 9.

As described above, according to the present invention, it is possible to rapidly detect an error in a data service and there is no need to store unnecessary data, thereby improving the efficiency of memory management.

The method for detecting an error can also be embodied as a computer program. Codes and code segments forming the computer program can be easily construed by computer programrs skilled in the art. Also, the computer program is stored in a computer readable media and read and executed by a computer, thereby implementing the method for detecting an error. Examples of the computer readable media include magnetic tapes, optical data storage devices, and carrier waves.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data storage medium on which an error detection packet structure is recorded for a data service of digital audio broadcasting, the data storage medium comprising:
address information about a channel through which data service is provided; and
error detection data corresponding to the address information,
wherein the address information and the error detection data are recorded in a packet data field in packet-mode data for the data service.

2. The data storage medium of claim 1, wherein the error detection data is one of cyclic redundancy check (CRC) data or forward error correction (FEC) data, and is created by accumulating packets having corresponding addresses according to a CRC or FEC creation method.

3. A data storage medium on which a program associated data structure included in audio service data is recorded, the data storage medium comprising:
a content indicator indicating information about a channel into which error detection data is loaded; and
an extended program associated data (X-PAD) subfield in which error detection data corresponding to the content indicator is recorded;
wherein the content indicator and the X-PAD subfield are recorded in an X-PAD field that is used to provide a data service in the form of additional data of an audio service of a digital audio broadcast.

4. A method of transmitting data service data packets in digital audio broadcasting, the method comprising:
(a) dividing data service data into packets of a predetermined size; and
(b) transmitting the packets at a bit rate of a data service and creating and transmitting error detection data packets for the transmitted packets at predetermined time intervals.

5. The method of claim 4, wherein, the error detection data packets are transmitted more frequently at a higher bit rate than at a lower bit rate.

6. The method of claim 4 or claim 5, wherein each of the error detection data packets comprises:
address information about a channel through which the data service is provided; and
error detection data corresponding to the address information,
wherein the address information and the error detection data are recorded in a packet data field in packet-mode data for the data service.

7. The method of claim 6, wherein the error detection data is one of cyclic redundancy check (CRC) data or forward error correction (FEC) data and is created by accumulating packets having corresponding addresses according to a CRC or FEC creation method.

8. A method of providing a data service of a digital audio broadcast, the method comprising:
(a) recording a content indicator indicating information about a channel through which error detection data is transmitted in an extended program associated data (X-PAD) field included in audio service data to transmit data service data after loading the data service data into the audio service data;
(b) creating the audio service data by recording the error detection data in an X-PAD subfield corresponding to the content indicator to form the X-PAD field; and
(c) transmitting the audio service data.

9. A method for detecting a reception error in a data service of digital audio broadcast, the method comprising:
(a) receiving a packet; and
(b) determining whether the received packet is an error detection packet;
(c) if the received packet is the error detection packet, analyzing the received packet to determine whether there is an error in receiving the packet; and
(d) if there is an error in receiving the packet, discarding the received packet and waiting for reception of another packet.

10. The method of claim 9, further comprising, if the received packet is a data service data packet, analyzing cyclic redundancy check (CRC) data included in the received packet, and if there is no error in the CRC data, storing the received packet, and if there is an error in the CRC data, discarding the received packet.

11. The method of claim 9 or claim 10, further comprising, if there is no error in the error detection packet as a result of analyzing the error detection packet, waiting for reception of another data service data packet.

12. The method of any one of claims 9 to 11, wherein the error detection packet comprises:
address information about a channel through which the data service is provided; and
error detection data corresponding to the address information,
wherein the address information and the error detection data are recorded in a packet data field in packet-mode data for the data service.

13. A method for detecting a reception error in a data service of digital audio broadcast, the method comprising:
(a) determining whether there are an extended program associated data (X-PAD) field and an error detection channel by analyzing a fixed program associated data (F-PAD) field of audio service data;
(b) if there exists an X-PAD field, analyzing a channel indicator included in the X-PAD field to search for a channel into which error detection data is loaded, and obtaining an error detection packet by analyzing an X-PAD subfield corresponding to the found error detection channel; and
(c) determining whether there is an error in received data service data by analyzing the obtained error detection packet.

14. An apparatus for detecting a reception error in a data service of a digital audio broadcast (DAB), the apparatus comprising:
a receiving unit (1010) which is operable to receive data;
a determining unit (1020) which is operable to determine whether the received data is error detection data and transmits the received data to an analyzing unit if the received data is the error detection data or determines whether there is an error in the received data if the received data is not error detection data, and transmits the received data to a storing unit (1040) if there is no error in the received data;
an error detection data analyzing unit (1030) which is operable to determine whether there is an error in the received error detection data by analyzing the received error detection data, to discard the received data stored in a storing unit (1040), and to wait for reception of another data according to a result of the analysis; and
a storing unit (1040) which is operable to store the data.

15. The apparatus of claim 14, wherein the error detection data comprises:
address information about a channel through which the data service is provided; and
error detection data corresponding to the address information,
wherein the address information and the error detection data are recorded in a packet data field in packet-mode data for the data service.

16. The apparatus of claim 14, wherein the error detection data comprises:
address information about a channel through which the data service is provided; and
error detection data corresponding to the address information,
wherein the address information and the error detection data are recorded in an extended program associated data (X-PAD) field that is used to provide a data service, after being included in an audio service of DAB.
